# EUROPÄISCHE PATENTANMELDUNG

(11) **EP 0 857 987 A2**
(43) Veröffentlichungstag der Anmeldung: **12.08.1998**
(21) Anmeldenummer: 98100193.6
(22) Anmeldetag: 08.01.1998
(51) Int. Cl.: G02B 6/12

(54) **Verfahren zur Herstellung von integriert-optischen Bauteilen**

(30) Priorität: 10.02.1997 DE 19704856
(71) Anmelder: ROBERT BOSCH GMBH, 70442 Stuttgart (DE)
(72) Erfinder: Pott, Wolfgang, 31139 Hildesheim (DE); Kragl, Hans, Dr., 31199 Diekholzen (DE)

(57) **Zusammenfassung**

Es wird ein Verfahren zur Herstellung eines integriert-optischen Bauteils offenbart, wobei Wellenleiter hergestellt werden, indem ein Polymersubstrat mit Wellenleiternuten produziert wird und anschließend mit Kleber befüllt wird. Während des Aushärtens des Klebers wird das Substrat gegen eine Zweischichtstruktur gedrückt, wobei die Schicht aus einer dünnen leitfähigen Folie und einer dicken verformbaren Folie besteht, wobei die erstere erwärmt wird.

## Beschreibung

### Stand der Technik

Die Erfindung geht aus von einem Verfahren zur Herstellung eines Wellenleiters in einem integriert-optischen Bauteil nach der Gattung des Hauptanspruchs.

Aus der DE 42 17 553 A1 ist ein integriert-optisches Bauteil bekannt, welches Faserankopplungen aufweist. Es besteht aus einem Basisteil aus polymerem Material und einem Deckelbauteil, welches im Wesentlichen als Negativform des Basisteils aufgebaut ist. An den äußeren Enden des Basisteils sind V-nutförmige Faserankopplungsbereiche vorgesehen. Im Mittelbereich des Basisteils ist eine Wellenleitervertiefung vorgesehen, welche die V-nutförmigen Faserankoppelbereiche verbindet. Das integriert-optische Bauteil wird hergestellt, indem ein optisch transparenter Kleber auf das Basisteil aufgebracht wird, und daraufhin das Deckelbauteil auf das Basisteil aufgedruckt wird. Durch den Druck wird der Kleber aus dem Bereich zwischen Basisteil und Deckelbauteil ausgetrieben und verbleibt nur in der Wellenleitervertiefung, wo er nach Aushärtung einen Wellenleiter bildet.

Zur Ausübung des Drucks sind sehr einfache Mechanismen denkbar. Beispielsweise wird das integriert-optische Bauteil nach Befüllen mit dem Kleber zwischen zwei Metallplatten gelegt, welche mittels Schraubzwingen oder Verschraubung zusammengepreßt werden.

Weiterhin ist bekannt, das Deckelbauteil nach Aushärten des Klebers wieder abzunehmen, so daß das integriert-optische Bauteil nur aus dem Basisteil aus polymeren Material und dem Wellenleiter aus ausgehärtetem Kleber besteht.

Bedingt durch das Produktionsverfahren verfügt das Basisteil nicht über perfekte Planarität. Da jedoch der Kleber nur in der Wellenleitervertiefung mit einer nennenswerten Dicke verbleiben soll, muß während der Aushärtephase des Klebers ein sehr hoher Druck auf das integriert-optische Bauteil ausgeübt werden. Dies führt jedoch zu Deformationen und Rissen der Wellenleiter.

### Vorteile der Erfindung

Das erfindungsgemäße Verfahren mit den kennzeichnenden Merkmalen des unabhängigen Anspruchs hat demgegenüber den Vorteil, daß die Qualität der Wellenleiter deutlich verbessert wird. Die Erwärmung des Bauteils indem die leitfähige Folie mit einem elektrischen Strom beaufschlagt wird, stellt eine technisch besonders einfache Lösung dar, welche darüber hinaus den Vorteil aufweist, daß sie in einfacher Weise mit einem elektrischen Regelkreis zur Stabilisierung und Regelung der Temperatur ergänzt werden kann.

Die Erwärmung des Bauteils durch Bestrahlung mit Mikrowellen bietet den Vorteil, daß eine kontaktlose Erwärmung ermöglicht wird.

Es ist besonders vorteilhaft, die leitfähige dünne Folie aus Metall, insbesondere Nickel, herzustellen, da somit die Widerstandsfähigkeit von Metallen gegenüber mechanischer und chemischer Belastung ausgenutzt werden kann.

Indem eine mit Erhebungen versehene leitfähige Folie verwendet wird, lassen sich einige Vertiefungen in dem Basisteil von Klebstoff freihalten, während andere Vertiefungen zu Wellenleitern werden. Hierdurch ergibt sich eine flexiblere Formgebung des Basisteils und somit auch des integriert-optischen Bauteils.

Durch die Verwendung einer Temperaturregelung kann die Aushärtetemperatur optimal an den verwendeten Kleber angepaßt werden, was besonders vorteilhaft ist.

Mit Hilfe eines federbelasteten Kniehebels lassen sich die beiden Platten, zwischen welche das integriert-optische Bauteil eingelegt wird, einfach zusammenpressen und mit ebenso wenig Handgriffen wieder zum Entnehmen des integriert-optischen Bauteils losen. Somit wird vorteilhafterweise eine rationelle Produktion ermöglicht.

### Zeichnungen

Ausführungsbeispiele der Erfindung sind in der Zeichnung dargestellt und in der nachfolgenden Beschreibung näher erläutert. Es zeigen Figur 1 die verschiedenen Baugruppen eines integriert-optischen Bauteils vor dem Zusammenbauen, Figur 2 ein Basisteil für ein integriert-optisches Bauteil während des Aushärtens des Klebers in den Wellenleiternuten, Figur 3 eine Presse mit federbelasteten Kniehebel zum Einbringen einer Kraft während des Aushärtens des Klebers, Figur 4 ein weiteres integriert-optisches Bauteil, Figur 5 ein weiteres integriert-optisches Bauteil während des Aushärtens.

### Beschreibung

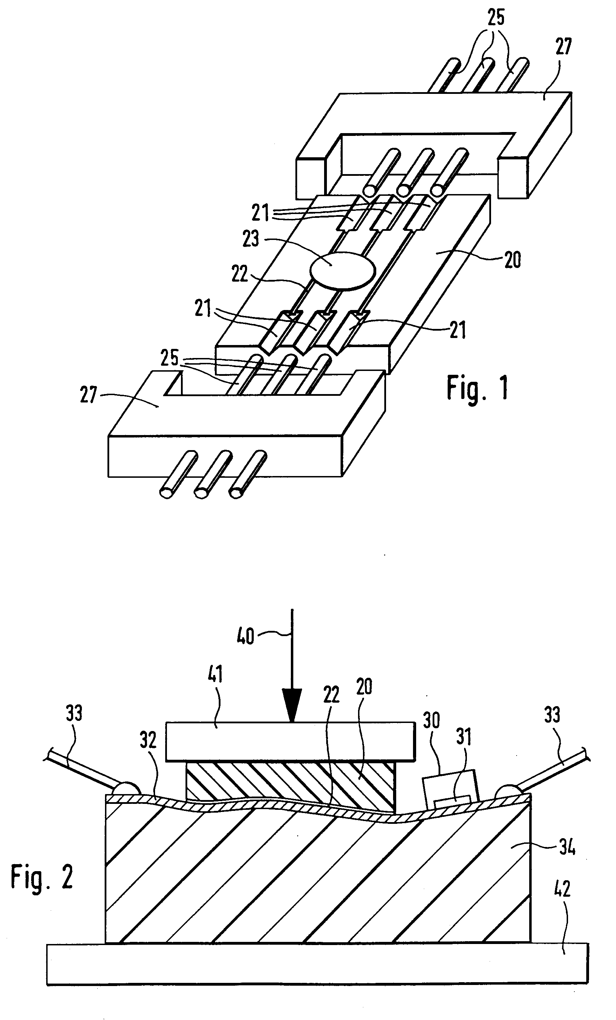

In Figur 1 ist ein integriert-optisches Bauteil vor dem Kleben der Wellenleiter gezeigt. Das integriert-optische Bauelement weist eine Basisplatte 20 auf, welche in Form einer etwa rechteckigen Platte mit planparallelen Flächen ausgeführt ist. Die Basisplatte 20 bestehe aus einem Polymermaterial. Auf jeder der beiden schmalen Stirnseiten weist die Platte drei längliche Vertiefungen mit v-förmigen Querschnitt auf, welche in etwa parallel zur Längsachse der Basisplatte 20 angeordnet sind. Diese Vertiefungen bilden die Faserführungsnuten 21. Jeweils gegenüberliegende Faserführungsnuten 21 sind durch Wellenleiternuten 22 verbunden. Hierbei sind die Wellenleiternuten 22 als Vertiefungen ausgeführt, welche in etwa einen rechteckigen Querschnitt haben mit einigen wenigen Mikrometern Höhe und Breite. In die Faserführungsnuten 21 einlegbar sind optische Fasern 25. Im hier gewählten Ausführungsbeispiel sind jeweils drei Fasern 25 in einem Stecker 27 vormontiert. Der Stecker 27 weist eine in etwa u-förmige Form auf, welche ein Ende der Basisplatte 20 umschließt, wobei gleichzeitig die optischen Fasern 25 in der Faserführungsnut 21 zu liegen kommen. Auf der Oberseite der Basisplatte 20, im Bereich der Wellenleiternuten 22, befindet sich ein Tropfen Kleber 23.

Die in Figur 1 gezeigte Anordnung wird nun zwischen zwei formstabilen planaren Platten gepreßt, wobei gleichzeitig der Kleber 23 in die Wellenleiternut 22 eindringt und aushärtet. Hierbei kann es einerseits vorgesehen sein, daß die optischen Fasern 25 und der Stecker 27 an der Basisplatte 20 verbleiben und dann gegebenenfalls durch die in die Faserführungsnut einfließende Klebermasse mit dem integriert-optischen Bauelement verbunden werden. Es ist jedoch ebenso möglich und vorgesehen, daß geeignete Maßnahmen getroffen werden, die Faserführungsnuten 21 von Kleber freizuhalten. In diesem Fall ist es möglich und vorgesehen, den Stecker 27 mit den darin eingelegten vorjustierten optischen Fasern 25 auf das fertige integriert-optische Bauteil aufzustecken und wieder zu entfernen.

Zum Aushärten des Klebers in der Wellenleiternut wird auf eine Hilfskonstruktion zurückgegriffen, wie sie in Figur 2 gezeigt ist.

Figur 2 zeigt eine Basisplatte 20 für ein integriertoptisches Bauteil. Auf der Unterseite der Basisplatte 20, welche hier im Querschnitt dargestellt ist, befindet sich eine Wellenleiternut 22. Die Wellenleiternut 22 ist bereits mit Kleber gefüllt. Die Basisplatte 20 weist eine fertigungstechnisch bedingte Welligkeit auf, welche hier übertrieben dargestellt wurde. Die mit der Wellenleiternut 22 versehene Seite der Basisplatte 20 ist mit einer dünnen leitfähigen Folie 32 bedeckt. Im hier gezeigten Ausführungsbeispiel ist die dünne leitfähige Folie 32 deutlich größer als die Basisplatte 20. Es sind jedoch auch andere Größenverhältnisse möglich und vorgesehen; es ist jedoch darauf zu achten, daß die dünne leitfähige Folie wenigstens die mit Kleber 23 ausgefüllten Wellenleiternuten 22 bedeckt. Im hier gezeigten Ausführungsbeispiel besteht die dünne leitfähige Folie 32 aus Nickel, wobei deren Dicke etwa 50 Mikrometer beträgt. Mit der dünnen leitfähigen Folie 32 verbunden, sind zwei Zuleitungsdrähte 33, über welche die dünne leitfähige Folie mit einem Strom beaufschlagbar ist.

Auf der von der Basisplatte 20 abgewandten Seite der dünnen leitfähigen Folie befindet sich eine dicke verformbare Folie 34, beispielsweise eine zwei Millimeter dicke Silikonfolie. Die Anordnung aus Basisplatte 20, dünner leitfähiger Folie 32, und dicker verformbarer Folie 34 wird zwischen zwei formstabile planare Platten, eine obere Platte 41 und eine untere Platte 42, eingelegt. Auf eine der beiden formstabilen planaren Platten, in diesem Fall die obere Platte 41, wirkt eine Kraft 40 in Richtung der anderen Platte, so daß die dazwischen liegende Anordnung unter wenigstens leichtem Druck steht. Auf der dünnen leitfähigen Folie 32 befindet sich an einem geeigneten Ort, im hier gezeigten Ausführungsbeispiel neben der Basisplatte 20, ein Temperatursensor 31, der mit einer thermischen Masse 30 in Verbindung steht. Der Temperatursensor 31 ist mit Anschlußdrähten versehen, welche nicht in der Zeichnung gezeigt sind.

Die dünne leitfähige Folie 32 kann erwärmt werden, indem sie über die Zuleitungsdrähte 33 mit einem Strom beaufschlagt wird. Somit wird auch der Kleber 23 in den Wellenleiternuten 22 erwärmt und härtet hierdurch aus. Gleichzeitig paßt sich die dicke verformbare Folie 34 der Welligkeit der Basisplatte 20 an, so daß der Kleber aus Bereichen der Basisplatte 20, in denen keine Wellenleiternut 22 vorgesehen ist, herausgedrückt wird, ohne die Basisplatte 20 während des Aushärtevorgangs durch starken mechanischen Druck übermäßig zu deformieren und damit die Rißbildung in den Wellenleiternuten zu begünstigen. Zur besseren Regelung der Temperatur kann der Temperatursensor 31, welcher auf der dünnen leitfähigen Folie neben der Basisplatte 20 angebracht ist, herangezogen werden. Der Temperatursensor 31 ist mit einer thermischen Masse 30 in Kontakt, welche so ausgelegt ist, daß sie über eine ähnliche Wärmekapazität, Wärmeabstrahlung, thermischen Kontakt zur dünnen leitfähigen Folie 32, usw. wie die Basisplatte 20 verfügt. Somit kann die mit dem Temperatursensor 31 gemessene Temperatur Aufschluß über die Temperaturverhältnisse an der Basisplatte 20 geben.

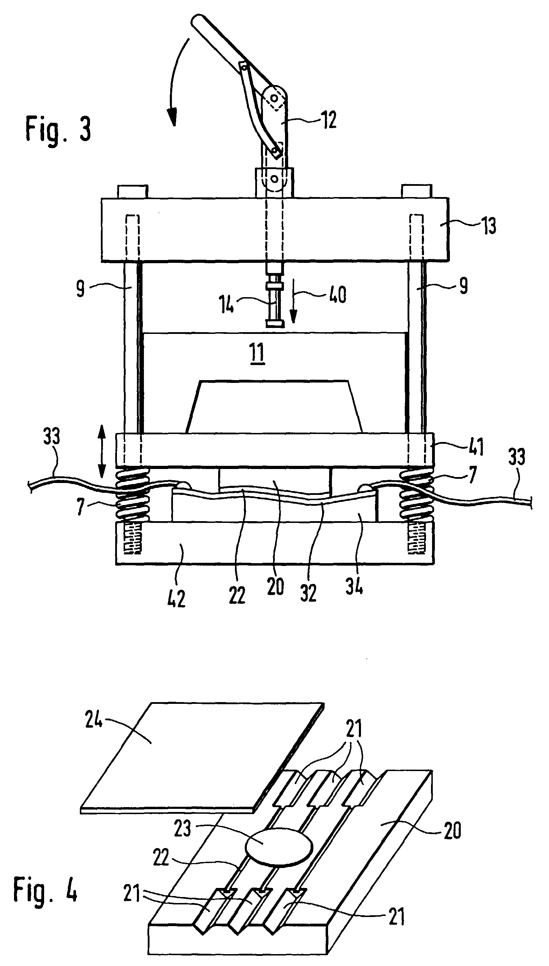

Die Krafteinleitung kann beispielsweise mit der in Figur 3 gezeigten Vorrichtung erfolgen. Figur 3 zeigt die Basisplatte 20 für ein integriert-optisches Bauteil, welche auf ihrer Unterseite eine Wellenleiternut 22 aufweist, in welche Kleber eingefüllt wurde. Die Basisplatte 20 liegt, mit der Wellenleiternut 22 nach unten weisend, auf der dünnen leitfähigen Folie 32, welche wiederum auf einer dicken verformbaren Folie 34 plaziert ist. Die dünne leitfähige Folie 32 ist rechts und links neben der Basisplatte 20 mit je einem Zuleitungsdraht 33 versehen. Die gesamte Anordnung aus Basisplatte, dünner leitfähiger Folie und dicker verformbarer Folie ist zwischen zwei formstabilen planaren Platten, eine obere Platte 41 und eine untere Platte 42 eingelegt. Die untere Platte 42 ist mit zwei Längsführungen 9 versehen, welche im hier gezeigten Ausführungsbeispiel als Bolzen ausgebildet sind, die mit ihrem einen Ende in ein in der unteren Platte 42 eingebrachtes Gewinde eingeschraubt werden. Die beiden anderen Enden der Bolzen sind mit einem oberen Joch 13 verbunden. Die obere Platte 41 ist so ausgebildet, daß sie auf den Längsführungen 9 in Richtung der unteren Platte oder in Richtung des Jochs verschoben werden kann. Zwischen der unteren Platte und der oberen Platte befinden sich ein Federmechanismus, welcher im hier gezeigten Ausführungsbeispiel als um die Längsführung 9 gewickelte Schraubenfeder 7 ausgebildet ist. Etwa mittig zwischen den beiden Längsführungen 9 ist im oberen Joch 13 eine weitere Bohrung vorgesehen, durch welche ein Druckbolzen 14 geführt wird. Der Druckbolzen 14 ist in etwa parallel zu den Längsführungen 9. Der Druckbolzen 14 ist mit seinem den formstabilen planaren Platten 41 und 42 abgewandten Ende mit dem beweglichen Teil eines Kniehebels 12 verbunden. Der stationäre Teil des Kniehebels 12 ist mit dem oberen Joch 13 verbunden. Zwischen dem Druckbolzen 14 und der oberen Platte 41 befindet sich ein Distanzstück 11, welches beispielsweise als hufeisenförmiges Bauteil ausgebildet ist.

Durch Betätigung des Kniehebels 12 verschiebt der Druckbolzen 14 das Distanzstück 11 und somit auch die obere Platte 41 um eine bestimmte Wegstrecke in Richtung der unteren Platte 42. Durch die Federkonstanten aller Gegenstände, welche sich zwischen der oberen Platte 41 und der unteren Platte 42 befinden, wird auch die Kraft bestimmt, welche auf den Kleber wirkt. Die dünne leitfähige Folie 32 wird sodann über die Zuleitungsdrähte 33 mit einem elektrischen Strom beaufschlagt, was zu einer Erwärmung des Klebers in den Wellenleiternuten 22 sowie der gesamten Basisplatte 20 führt. Bedingt durch die geringe Wärmeleitfähigkeit der dicken verformbaren Folie 34, welche aus Silikon hergestellt ist, läßt sich eine zügige Erwärmung des Klebers und somit auch eine schnelle Aushärtung erreichen. Hierdurch wird erreicht, daß das Material der Basisplatte 20 nicht allzusehr vom Kleber angegriffen wird. Nach Aushärtung des Klebers kann durch abermalige Betätigung des Kniehebels die Vorrichtung sehr schnell entspannt werden. Somit ist die Einrichtung schnell zur Fertigung eines weiteren integriert-optischen Bauteils einsatzbereit.

Nach Lösen des Kniehebels kann die Anordnung aus Basisplatte 20, dünner leitfähiger Folie 32 und der dicken verformbaren Folie 34 entnommen werden. Die Anordnung wird nun vorsichtig an der Grenzfläche zwischen dünner leitfähiger Folie 32 und Basisplatte 20 getrennt, so daß schließlich eine Basisplatte 20 mit mit ausgehärtetem Kleber befüllten Wellenleiternuten 22 zurückbleibt.

Andere Arten, eine Kraft auszuüben, sind ebenfalls denkbar und vorgesehen. Beispielsweise ist es möglich, die obere Platte 41 und die untere Platte 42 durch eine Schraubzwinge zusammenzudrücken, oder durch geeignete Materialauswahl in einfacher Weise die Gewichtskraft der oberen Platte 41 wirken zu lassen. Auch sind andere Arten der Aushärtung des Klebers möglich und vorgesehen. Beispielsweise kann die Beheizung der dünnen leitfähigen Folie 32 durch Bestrahlung mit Mikrowellen kontaktlos erfolgen oder es kann ein hierfür geeigneter Kleber ohne indirekte Beheizung durch Bestrahlung mit UV-Licht ausgehärtet werden.

Weiterhin ist es vorgesehen, die Basisplatte 20 mit weiteren Öffnungen zu versehen, welche nicht mit Kleber 23 befüllt werden sollen. Dies können die Faserführungsnuten 21 sein, mit Kleber nicht gefüllte Öffnungen und Nuten in der Basisplatte können jedoch auch aus anderen Zwecken wünschenswert sein. Zu diesem Zweck wird die dünne leitfähige Folie 32 mit Mikrostrukturen versehen, welche ein genaues Negativabbild der nicht zu befüllenden Strukturen in der Basisplatte 20 darstellen. In diese Strukturen kann somit kein Kleber fließen. In besonders einfacher Weise kann dies erreicht werden, wenn als dünne leitfähige Folie 32 eine Mikrostruktur aus Nickel verwendet wird, welche dem gleichen Mikrostrukturprozeß wie die Basisplatte 20 entstammt. Hierbei können teilweise die gleichen Masken verwendet werden.

Das erfindungsgemäße Verfahren kann auch für integriert-optische Bauteile benutzt werden, welche eine Basisplatte mit Wellenleiternuten, welche mit Kleber gefüllt sind, sowie einen Deckel aufweist, wobei der Deckel fest mit der Basisplatte verklebt ist.

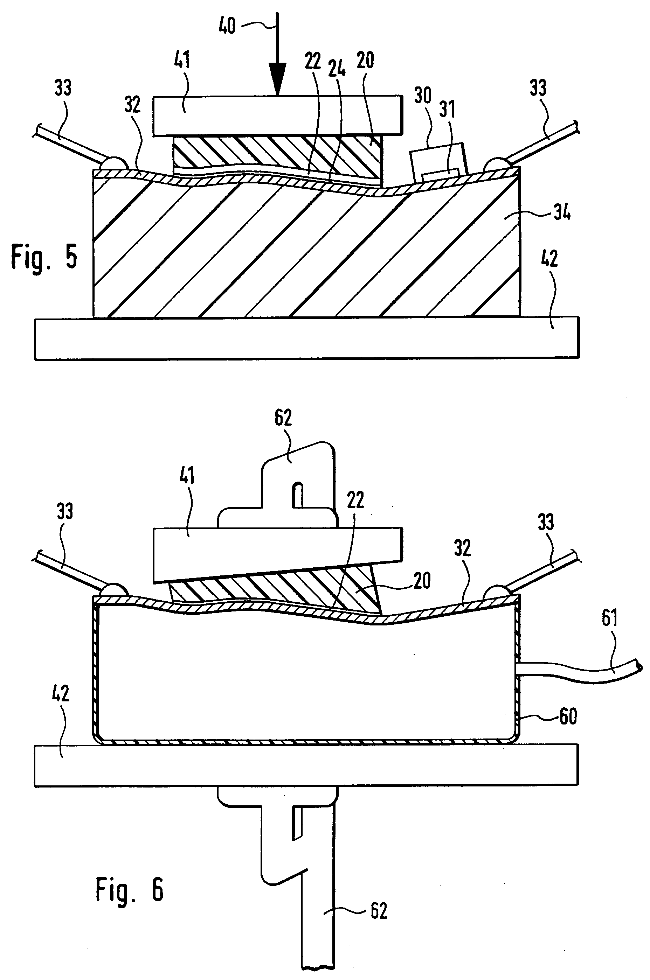

Dies ist in Figur 4 gezeigt. In Figur 4 sind wiederum Bestandteile eines integriert-optischen Bauteils gezeigt, wobei gleiche Bestandteile mit den gleichen Bezugszeichen versehen wurden. Stecker und vormontierte optische Fasern wurden der Klarheit halber weggelassen, können jedoch in ähnlicher Weise wie in Figur 1 gezeigt verwendet werden. Das integriert-optische Bauteil weist wiederum eine Basisplatte 20 auf, welche als näherungsweise quaderförmige Polymerstruktur ausgebildet ist. Sie weist an je zwei gegenüberliegenden Stirnseiten je drei Faserführungsnuten 21 auf, welche als Vertiefungen mit dreieckigem Querschnitt ausgebildet sind. Je zwei gegenüberliegende Faserführungsnuten 21 sind durch eine Wellenleiternut 22 verbunden, wobei die Wellenleiternut einen rechteckigen Querschnitt mit etwa 6 Mikrometern Tiefe und Breite aufweist. Auf der Basisplatte 20, im Bereich der Wellenleiternuten 22, befindet sich eine kleine Menge 23. Zusätzlich weist das integriert-optische Bauteil einen Deckel auf, welcher im hier gewählten Ausführungsbeispiel als dünne Polymerplatte oder Polymerfolie ausgebildet ist.

In der Explosionszeichnung aus Figur 4 ist der Deckel über der Basisplatte 20 angeordnet. Zur Fertigstellung des Bauteils wird der Deckel auf die mit Kleber versehene Basisplatte 20 abgesenkt, so daß er wenigstens den Bereich der Wellenleiternuten 22 komplett überdeckt, und angedrückt, so daß der Kleber 23 in die Wellenleiternuten 22 gedrückt wird, jedoch gleichzeitig aus den Bereichen zwischen den Wellenleiternuten weitgehend entfernt wird. Nach Aushärtung des Klebers 23 verbleibt der Deckel als Bestandteil des integriert-optischen Bauteils.

Zum Andrücken des Deckels 24 auf die Basisplatte 20 kann das schon aus Figur 2 bekannte erfindungsgemäße Verfahren eingesetzt werden, wie es in Figur 5 dargestellt ist.

Hierbei kennzeichnen gleiche Bezugszeichen, wie in den vorherigen Figuren, gleiche Bestandteile. Es ist jedoch darauf zu achten, daß entweder der Deckel oder die Basisplatte hinreichend dünn und elastisch sind, um an die Unebenheiten des jeweils anderen Bauteils anzupassen. Damit also keine mit Kleber aufgefüllten Hohlräume zwischen Deckel und Basisplatte entstehen, muß die Anforderung erfüllt werden, daß der Deckel 24 leicht verformbar ist.

Eine weiteres besonders einfaches Ausführungsbeispiel ist in Figur 6 gezeigt.

Figur zeigt eine Basisplatte 20 auf deren Unterseite sich eine Wellenleiternut 22, die bereits mit Kleber gefüllt ist, befindet. Die Basisplatte 20 weist eine fertigungstechnisch bedingte Welligkeit auf, welche hier übertrieben dargestellt wurde. Die mit der Wellenleiternut 22 versehene Seite der Basisplatte 20 ist mit einer dünnen leitfähigen Folie 32 bedeckt. Wiederum besteht die dünne leitfähige Folie 32 aus Nickel, wobei deren Dicke etwa 50 Mikrometer beträgt. Mit der dünnen leitfähigen Folie 32 verbunden, sind zwei Zuleitungsdrähte 33, über welche die dünne leitfähige Folie mit einem Strom beaufschlagbar ist. Auf der von der Basisplatte 20 abgewandten Seite der dünnen leitfähigen Folie befindet sich ein Luftkissen 60. Die Anordnung aus Basisplatte 20, dünner leitfähiger Folie 32, und Luftkissen 60 wird zwischen zwei formstabile Platten, eine obere Platte 41 und eine untere Platte 42, eingelegt. Die obere Platte 41 ist fertigungstechnisch bedingt leicht keilförmig ausgeführt, was hier übertrieben dargestellt wurde. An das Luftkissen 60 ist ein Zuleitungsschlauch 61 angeschlossen.

Die gesamte Anordnung ist von einer Schraubzwinge 62 umschlossen.

Die dünne leitfähige Folie 32 kann erwärmt werden, indem sie über die Zuleitungsdrähte 33 mit einem Strom beaufschlagt wird. Somit wird auch der Kleber 23 in den Wellenleiternuten 22 erwärmt und härtet hierdurch aus. Gleichzeitig wird durch leichtes Befüllen des Luftkissens 60 ein Druck erzeugt, der die beiden formstabilen Platten auseinder drückt. Durch die Gegenwirkung zu diesm Auseinanderdrücken paßt sich das Luftkissen 60 der Welligkeit der Basisplatte 20 an, so daß der Kleber aus Bereichen der Basisplatte 20, in denen keine Wellenleiternut 22 vorgesehen ist, herausgedrückt wird, ohne die Basisplatte 20 während des Aushärtevorgangs durch starken mechanischen Druck übermäßig zu deformieren und damit die Rißbildung in den Wellenleiternuten zu begünstigen. Gleichzeitig wird auf dieselbe Weise auch die leichte Keilform der einen formstabilen Platte ausgeglichen. Zur besseren Regelung der Temperatur kann eine Regelung wie zu Figur 2 beschrieben herangezogen werden.

Es ist ebenso vorgesehen, das Luftkissen mit einem anderen Gas oder einer Flüssigkeit zu füllen.

## Patentansprüche

1. Verfahren zur Herstellung eines Polymerbauteils, insbesondere eines integriert-optischen Bauteils, mit einer in etwa planaren Basisplatte aus Polymermaterial, die eine mikrostrukturierte Vertiefung aufweist, wobei auf die Basisplatte, in die Nähe der Vertiefung ein durch Erwärmung aushärtbarer Kleber aufgebracht wird, wobei die mit Kleber versehene Basisplatte zwischen zwei formstabile Platten eingebracht wird, wobei wenigstens eine der Platten mit einer Kraft beaufschlagt wird, die in Richtung der anderen Platte wirkt, dadurch gekennzeichnet, daß auf die mit Kleber versehene Basisplatte eine dünne, leitfähige Folie aufgelegt wird, daß auf die dünne, leitfähige Folie ein verformbarer Körper aufgelegt wird, daß die mit der Folie und dem Körper belegte Basisplatte zwischen die beiden formstabilen, Platten eingebracht wird und daß die leitfähige Folie erwärmt wird.

2. Verfahren nach Anspruch 1, dadurch gekennzeichnet, daß die dünne, leitfähige Folie dadurch erwärmt wird, daß sie mit einem elektrischen Strom beaufschlagt wird.

3. Verfahren nach Anspruch 1, dadurch gekennzeichnet, daß die dünne, leitfähige Folie dadurch erwärmt wird, daß sie mit Mikrowellen bestrahlt wird.

4. Verfahren nach einem der vorhergehenden Ansprüche, dadurch gekennzeichnet, daß als dünne, leitfähige Folie eine Metallfolie verwendet wird.

5. Verfahren nach Anspruch 4, dadurch gekennzeichnet, daß die dünne, leitfähige Folie aus Nickel besteht.

6. Verfahren nach einem der vorhergehenden Ansprüche, dadurch gekennzeichnet, daß die Basisplatte mit einer weiteren Vertiefung versehen wird, daß die dünne, leitfähige Folie mit einer passenden Erhebung versehen wird, und daß die dünne, leitfähige Folie durch Einrasten der Erhebung in der weiteren Vertiefung auf der Basisplatte positioniert wird.

7. Verfahren nach einem der vorhergehenden Ansprüche, dadurch gekennzeichnet, daß als verformbarer Körper eine dicke, verformbare Folie, insbesondere eine etwa 2mm dicke Silkonschicht, verwendet wird.

8. Verfahren nach einem der Ansprüche 1 bis 6, dadurch gekennzeichnet, daß als verformbarer Körper ein mit einem Druckmedium, beispielsweise einem Gas oder einer Flüssigkeit befüllbarer Hohlkörper mit einer elastischen Außenhaut, insbesondere ein Luftkissen (61), verwendet wird.

9. Verfahren nach einem der vorhergehenden Ansprüche, dadurch gekennzeichnet, daß die Temperatur der dünnen, leitfähigen Folie und/oder der Basisplatte gemessen wird, und daß die gemessene Temperatur zu einer Regelng der Erwärmung der dünnen, leitfähigen Folie benutzt wird.

10. Verfahren nach einem der vorhergehenden Ansprüche, dadurch gekennzeichnet, daß die eine planare Platte mit Hilfe eines federbelasteten Kniehebels auf die mit der Folie und dem Körper belegte Basisplatte gedrückt wird.
